(19) Europäisches Patentamt
European Patent Office
Office européen des brevets

(11) **EP 4 492 633 A1**

(12) **EUROPEAN PATENT APPLICATION**

(43) Date of publication:
**15.01.2025 Bulletin 2025/03**

(21) Application number: **23184487.9**

(22) Date of filing: **10.07.2023**

(51) International Patent Classification (IPC):
**H02J 50/80** (2016.01) **H02J 50/10** (2016.01)
**H02J 50/90** (2016.01) **H02J 7/00** (2006.01)
**H02J 7/34** (2006.01)

(52) Cooperative Patent Classification (CPC):
**H02J 50/80; H02J 50/10; H02J 50/90;**
H02J 7/00034; H04B 5/79

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **NXP B.V.**
**5656 AG Eindhoven (NL)**

(72) Inventors:
• **Haslinger, Dorian**
**5656 AG Eindhoven (NL)**

• **Neophytou, Kyriakos**
**5656 AG Eindhoven (NL)**

(74) Representative: **Krott, Michel**
**NXP Semiconductors**
**Intellectual Property Group**
**High Tech Campus 60**
**5656 AG Eindhoven (NL)**

Remarks:
Amended claims in accordance with Rule 137(2) EPC.

(54) **WIRELESS CHARGING DEVICE AND OPERATING METHOD**

(57) In accordance with a first aspect of the present disclosure, a wireless charging device is provided, comprising: a charging unit configured to charge an external device by wirelessly transferring power to said external device; a detection unit configured to detect whether the external device is a passive near field communication (NFC) device or an active NFC device by analyzing a modulation characteristic of an NFC signal received by the external device; a controller configured to control the charging unit in dependence on an output of the detection unit, wherein said output indicates whether the external device is a passive NFC device or an active NFC device. In accordance with a second aspect of the present disclosure, a corresponding method of operating a wireless charging device is conceived.

300

**302**
Detecting, by a detection unit included in a wireless charging device, whether an external device is a passive NFC device by analyzing a modulation characteristic of an NFC signal received by the external device

**304**
Charging, by a charging unit included in the wireless charging device, the external device by wirelessly transferring power to said external device

**306**
Controlling, by a controller included in the wireless charging device, the charging unit in dependence on an output of the detection unit, wherein said output indicates whether the external device is a passive NFC device

**FIG. 3**

**Description**

TECHNICAL FIELD

The present disclosure relates to a wireless charging device. Furthermore, the present disclosure relates to a corresponding method of operating a wireless charging device.

BACKGROUND

Near field communication (NFC) is an established technology for proximity communication for various use cases. Using this technology, a primary device may generate a radio frequency (RF) field at a frequency of 13.56 MHz to power a secondary device. Modulation techniques are used to communicate in both directions. The secondary device may be a passive device (e.g., a tag or a transponder) or an active, typically battery-powered device. An RF field generated by an NFC reader can be used to charge the battery of the secondary device. This process is referred to as wireless charging. Some wireless charging devices may use low frequency (LF) transmitters to charge the battery of the secondary device; an example of such a device is the so-called Qi-charger. Qi is an open interface standard that defines wireless power transfer using inductive charging over distances of up to 4 cm; this standard has been developed by the Wireless Power Consortium.

SUMMARY

In accordance with a first aspect of the present disclosure, a wireless charging device is provided, comprising: a charging unit configured to charge an external device by wirelessly transferring power to said external device; a detection unit configured to detect whether the external device is a passive near field communication (NFC) device or an active NFC device by analyzing a modulation characteristic of an NFC signal received by the external device; a controller configured to control the charging unit in dependence on an output of the detection unit, wherein said output indicates whether the external device is a passive NFC device or an active NFC device.

In one or more embodiments, the controller is further configured to prevent the charging unit from charging the external device if the detection unit has detected that the external device is a passive NFC device, or to reduce the amount of power transferred by the charging unit if the detection unit has detected that the external device is a passive NFC device.

In one or more embodiments, the controller is further configured to permit the charging unit to charge the external device if the detection unit has detected that the external device is an active NFC device.

In one or more embodiments, the modulation characteristic is indicative of a type of modulation applied to the NFC signal, and the type of modulation is passive load modulation or active load modulation.

In one or more embodiments, the modulation characteristic is a minimum value of the NFC signal during a predefined time window.

In one or more embodiments, the detection unit is configured to detect that the external device is a passive NFC device if said minimum value of the NFC signal remains below a predefined threshold during the entire time window.

In one or more embodiments, the controller is further configured to keep the charging unit in a charging mode by default.

In one or more embodiments, the charging unit comprises a low frequency (LF) transmitter configured to transfer power to the external device.

In accordance with a second aspect of the present disclosure, a method of operating a wireless charging device is conceived, comprising: detecting, by a detection unit included in the wireless charging device, whether an external device is a passive near field communication (NFC) device or an active NFC device by analyzing a modulation characteristic of an NFC signal received by the external device; charging, by a charging unit included in the wireless charging device, the external device by wirelessly transferring power to said external device; controlling, by a controller included in the wireless charging device, the charging unit in dependence on an output of the detection unit, wherein said output indicates whether the external device is a passive NFC device or an active NFC device.

In one or more embodiments, the controller permits the charging unit to charge the external device if the detection unit has detected that the external device is an active NFC device.

In one or more embodiments, the modulation characteristic is indicative of a type of modulation applied to the NFC signal, and the type of modulation is passive load modulation or active load modulation.

In one or more embodiments, the modulation characteristic is a minimum amplitude of the NFC signal during a predefined time window.

In one or more embodiments, the detection unit detects that the external device is a passive NFC device if said minimum amplitude of the NFC signal remains below a predefined threshold during the entire time window.

In one or more embodiments, the controller keeps the charging unit in a charging mode by default.

DESCRIPTION OF DRAWINGS

Embodiments will be described in more detail with reference to the appended drawings.

Fig. 1 shows an example of a charging system including a wireless charging device coupled to a device under charge.

Fig. 2 shows an illustrative embodiment of an wireless charging device.

Fig. 3 shows an illustrative embodiment of a method of operating a wireless charging device.

Fig. 4 shows an illustrative embodiment of a communication system.

Fig. 5 shows an illustrative embodiment of an NFC front-end.

Fig. 6 shows another illustrative embodiment of a communication system.

Fig. 7 shows a graph displaying raw data of amplitude versus time.

Fig. 8 shows a graph displaying a moving minimum of amplitude versus time.

Fig. 9 shows another illustrative embodiment of a method of operating a wireless charging device.

DESCRIPTION OF EMBODIMENTS

As mentioned above, near field communication (NFC) is an established technology for proximity communication for various use cases. Using this technology, a primary device may generate a radio frequency (RF) field at a frequency of 13.56 MHz to power a secondary device. Modulation techniques are used to communicate in both directions. The secondary device may be a passive device (e.g., a tag or a transponder) or an active, typically battery-powered device. An RF field generated by an NFC reader can be used to charge the battery of the secondary device. This process is referred to as wireless charging. Some wireless charging devices may use low frequency (LF) transmitters to charge the battery of the secondary device; an example of such a device is the so-called Qi-charger. Qi is an open interface standard that defines wireless power transfer using inductive charging over distances of up to 4 cm; this standard has been developed by the Wireless Power Consortium.

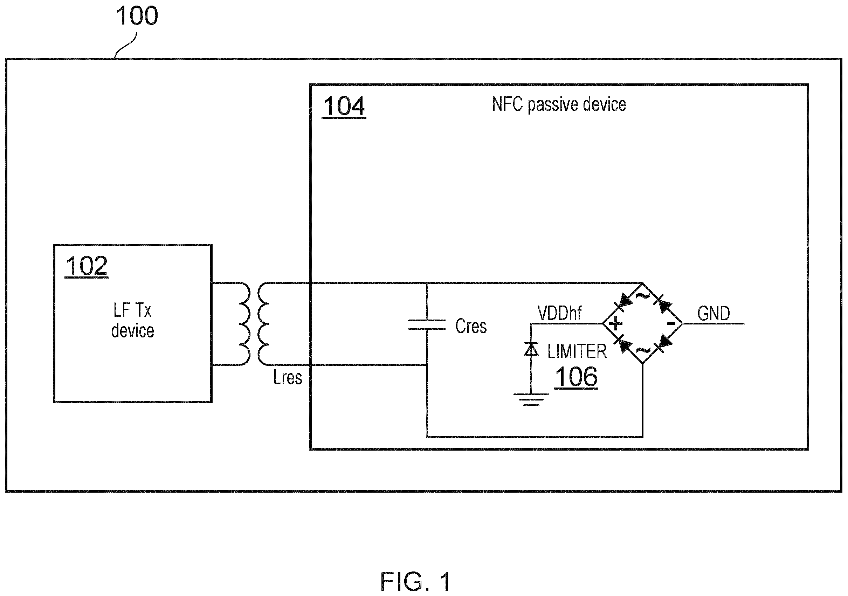

Fig. 1 shows an example of a charging system 100 including a wireless charging device which is coupled to a device under charge. The wireless charging device is a low frequency (LF) transmitter device 102, such as a Qi charger, and the device under charge is a passive NFC device 104 that is inductively coupled to the LF transmitter device 102. The passive NFC device 104 may be a smart card, for example, which has unintentionally been brought into proximity of the LF transmitter device 102. More specifically, the LF transmitter device 102 is typically used for charging the battery of active NFC devices, such as mobile phones. As used herein, the term "passive device" refers to a device which does not have an internal power source (e.g., a battery), and which is powered by the field. It is noted that a passive device may contain one or more small storage elements for temporary storing energy extracted from the field.

Typically, a passive device is configured to perform passive load modulation. In contrast, the term "active device" refers to a device which has an internal power source, such as a battery. Typically, an active device is configured to perform active load modulation. Active load modulation may be defined as a type of modulation according to which an antenna current is provided by a driver amplifier circuit during modulation. This definition of active load modulation is given in the article "Active Load Modulation for Contactless Near-Field Communication", written by Michael Gebhart et al. and published at the IEEE International Conference on RFID-Technologies and Applications (RFID-TA), 2012 (DOI: 10.1109/RFID-TA.2012.6404518). Conversely, passive load modulation may be defined as a type of modulation according to which the antenna current is not provided by a driver amplifier circuit.

The skilled person will appreciate that the LF transmitter device 102 typically operates in a frequency range in the order of tens to hundreds of kHz, while the passive NFC device 104 typically operates at a frequency of 13.56 MHz. However, if the induced voltage becomes higher than the limiter voltage, the limiter 106 of the passive NFC device 104 will become active and shortcut the NFC coil. As a result, some hundreds of milliamperes up to several amperes of current may be injected into the passive NFC device 104. This, in turn, may damage the passive NFC device 104 very quickly.

Now discussed are a wireless charging device and a corresponding method of operating a wireless charging device, which facilitate avoiding damage of an external device, for instance of an external device which has unintentionally been brought into proximity of the wireless charging device.

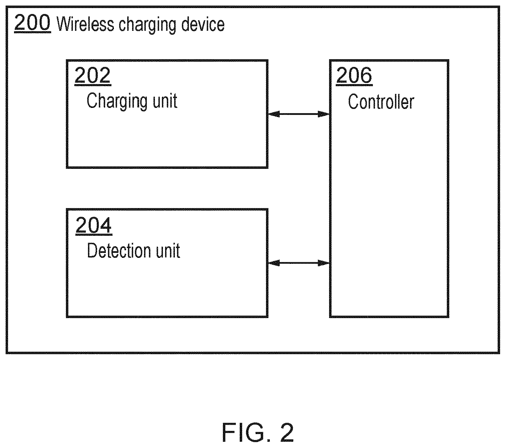

**Fig. 2** shows an illustrative embodiment of an wireless charging device 200. The wireless charging device 200 comprises a charging unit 202, a detection unit 204 and a controller 206. The charging unit 202 is configured to charge an external device (not shown) by wirelessly transferring power to said external device. Furthermore, the detection unit 204 is configured to detect whether the external device is a passive NFC device or an active NFC device by analyzing a modulation characteristic of an NFC signal received by the external device. Finally, the controller 206 is configured to control the charging unit 202 in dependence on an output of the detection unit 204, wherein said output indicates whether the external device is a passive NFC device or an active NFC device. By controlling the charging unit 202 in dependence on an output of the detection unit 204, in particular an output indicative of an analyzed modulation characteristic of an NFC signal received by the external device, the risk of causing damage to the external device may be reduced.

In one or more embodiments, the controller is further configured to prevent the charging unit from charging the external device if the detection unit has detected that the external device is a passive NFC device, or to reduce the amount of power transferred by the charging unit if the detection unit has detected that the external device is a passive NFC device. This further facilitates avoiding damage to the external device, because it may be ensured that no excessive amount of power is transferred to a passive NFC device. In one or more embodiments, the controller is further configured to permit the charging unit to charge the external device if the detection unit has detected that the external device is an active NFC device. In this way, the charging process may start relatively quickly, after it has been verified that the external device will most likely not become damaged.

In one or more embodiments, the modulation characteristic is indicative of a type of modulation applied to the NFC signal, and the type of modulation is passive load modulation or active load modulation. By controlling the charging unit in dependence on whether the type of modulation applied by the external device is passive load modulation or active load modulation, the risk of causing damage to the external device may easily be reduced. For instance, if the type of modulation is passive load modulation, the external device is most likely a passive NFC device. In that case, charging of the external device may be prevented, to avoid damaging the external device.

In one or more embodiments, the modulation characteristic is a minimum amplitude of the NFC signal during a predefined time window. The minimum amplitude of the NFC signal provides a suitable indication of whether or not the external device is a passive NFC device. In a practical implementation, the detection unit is configured to detect that the external device is a passive NFC device if said minimum amplitude of the NFC signal remains below a predefined threshold during the entire time window. In one or more embodiments, the controller is further configured to keep the charging unit in a charging mode by default. In this way, unnecessary switching to a different mode (i.e., a mode in which charging is prevented) may be avoided. Furthermore, in a practical implementation, the charging unit comprises an LF transmitter configured to transfer power to the external device.

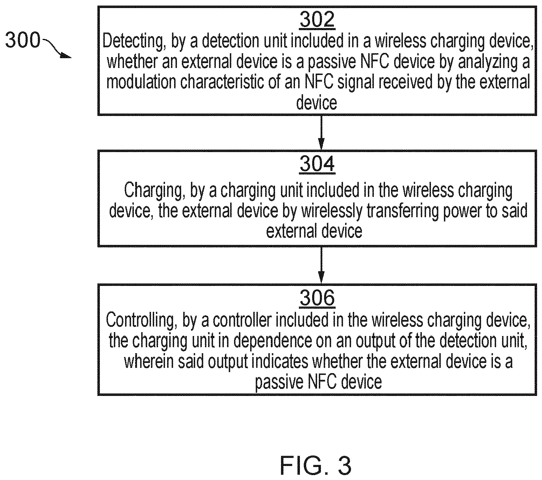

**Fig. 3** shows an illustrative embodiment of a method 300 of operating a wireless charging device. The method 300 comprises the following steps. At 302, a detection unit included in the wireless charging device detects whether an external device is a passive NFC device or an active NFC device by analyzing a modulation characteristic of an NFC signal received by the external device. Furthermore, at 304, a charging unit included in the wireless charging device charges the external device by wirelessly transferring power to said external device. Furthermore, at 306, a controller included in the wireless charging device controls the charging unit in dependence on an output of the detection unit, wherein said output indicates whether the external device is a passive NFC device or an active NFC device. As mentioned above, by controlling the charging unit in dependence on an output of the detection unit, in particular an output indicative of an analyzed modulation characteristic of an NFC signal received by the external device, the risk of causing damage to the external device may be reduced.

In accordance with the present disclosure a passive NFC device (e.g., an NFC-enabled smart card or an NFC tag) may be protected based on a the detection of a back link characteristic of a PICC to a PCD, in particular by a modulation characteristic of an NFC signal sent by said PICC. Typically, an NFC system includes a reader device - sometimes referred to as a reader, an interrogator, a poller or a proximity coupling device (PCD) - which generates a high-frequency radio field, and a passive or active communication counterpart. The communication counterpart may be a passive transponder or an active card emulation device, for example, which may be referred to as a proximity integrated circuit card (PICC) or a listener. The reader device emits a radio frequency field that may power the communication counterpart. Modulation schemes and signal coding are applied for the communication between the devices. Specific implementation examples are described, inter alia, in the technical standards issued by the NFC Forum, and in the technical standards ISO/IEC 14443, ISO/IEC 15693, ISO/IEC 18092.

It is noted that a passive device typically applies a different type of modulation compared to an active NFC device which for example emulates a card. The PICC modulator signal may be measured as part the receiver signal, which may be then post-processed to analyze which type of device (passive or active NFC) is used. For example, when a cell phone behaves like a card (e.g., a banking card) it may be very difficult to identify on a protocol level which type of device is present. By analyzing the NFC signals sent by the PICC as set forth above a low-cost and simple solution may be realized, to overcome the existing limitations and protect passive NFC devices in a less complex manner. For instance, compared to solutions using a complex decision matrix or algorithm, the presently disclosed device and method may provide a simple and effective solution.

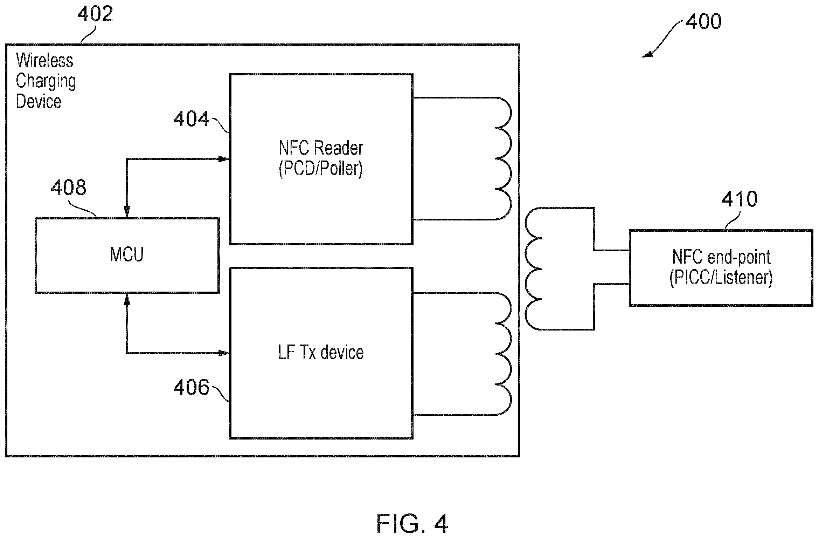

**Fig. 4** shows an illustrative embodiment of a communication system 400. The communication system 400 comprises a wireless charging device 402 and an NFC end-point 410 (i.e., a PICC or listener) which are configured to communicate with each other. For this purpose, the wireless charging device 404 comprises an NFC reader 404 (i.e., a PCD or poller) which is configured to establish NFC with the NFC end-point 410. Furthermore, the wireless charging device 402 comprises a low-frequency transmitter device 406 that is configured to wirelessly charge the NFC end-point 410. In addition, the wireless charging device 402 comprises a microcontroller 408 configured to analyze NFC signals received from the NFC end-point 410 through the NFC reader 404. Furthermore, the microcontroller 408 may control the charging unit (i.e., the low-frequency transmitter device 406) in dependence on a result of analysis performed on the NFC signals.

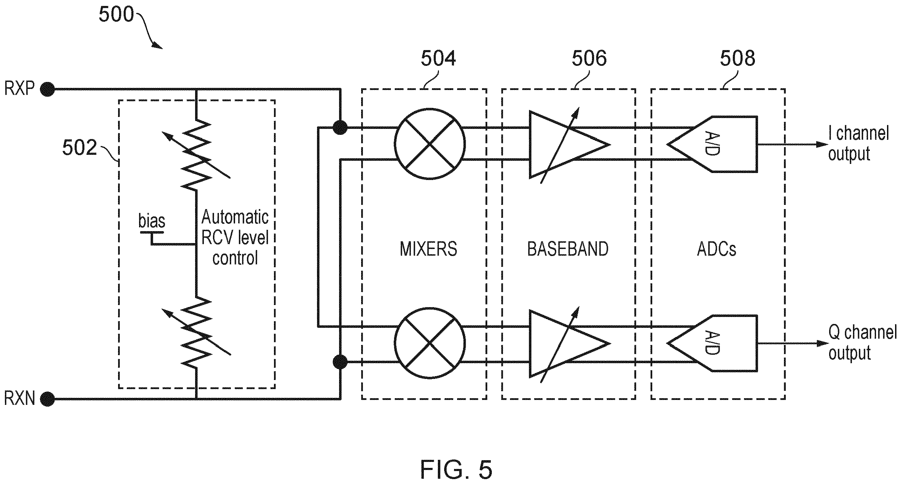

**Fig. 5** shows an illustrative embodiment of an NFC front-end 500. The NFC front-end 500 comprises an automatic receiver voltage level (RCV) level control block 502, and mixers 504, baseband amplifiers 506 and analog-to-digital converters 508 divided into an I-channel and a Q-channel. To protect passive NFC devices from power which is generated, for example, by an LF transmitter, the modulation characteristic of the back link between a PICC and PCD may be analyzed. More specifically, the back link (i.e., the NFC signal sent by the PICC) may be measured by the NFC front-end 500, which may be integrated into a PCD. The measured raw data from the I-channel and the Q-channel may then be post-processed by the microcontroller to determine the type of modulation used by the PICC.

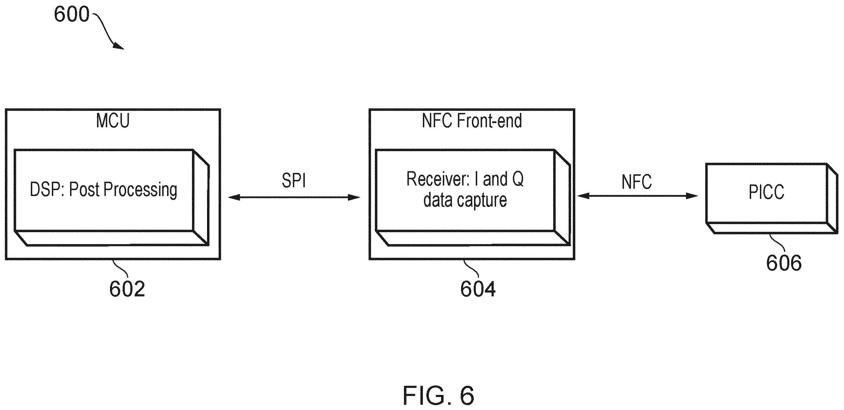

**Fig. 6** shows another illustrative embodiment of a communication system 600. The communication system 600 comprises a microcontroller 602 and an NFC front-end 604, which may form part of a wireless charging device of the kind set forth above. The wireless charging device is configured to establish near field communication with an external PICC 606. The microcontroller 602 and the NFC front-end 604 are connected to each other through a serial peripheral interface (SPI). The microcontroller 602 is configured to analyze the I-data and Q-data obtained from the NFC front-end 604, which are based on an NFC signal received from the PICC 606. For example, the microcontroller 602 may calculate amplitude characteristics of the back link.

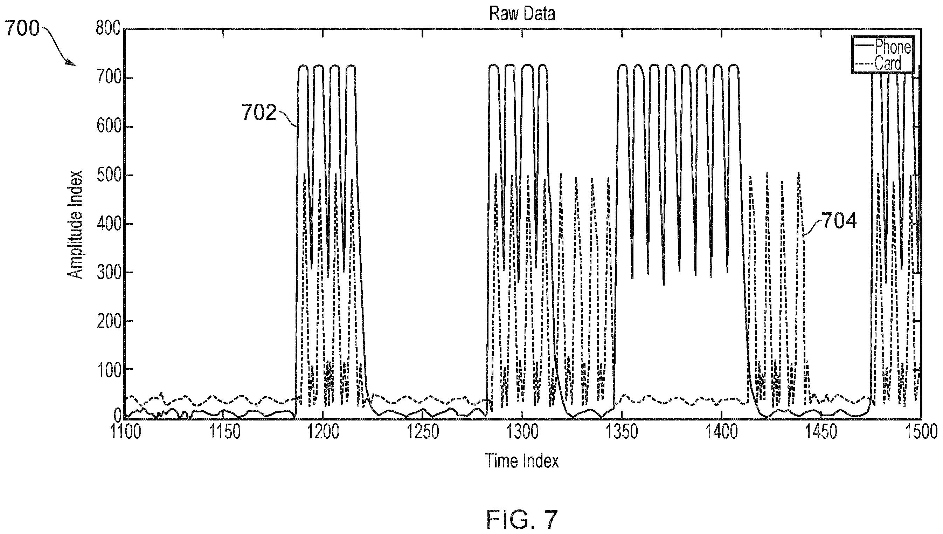

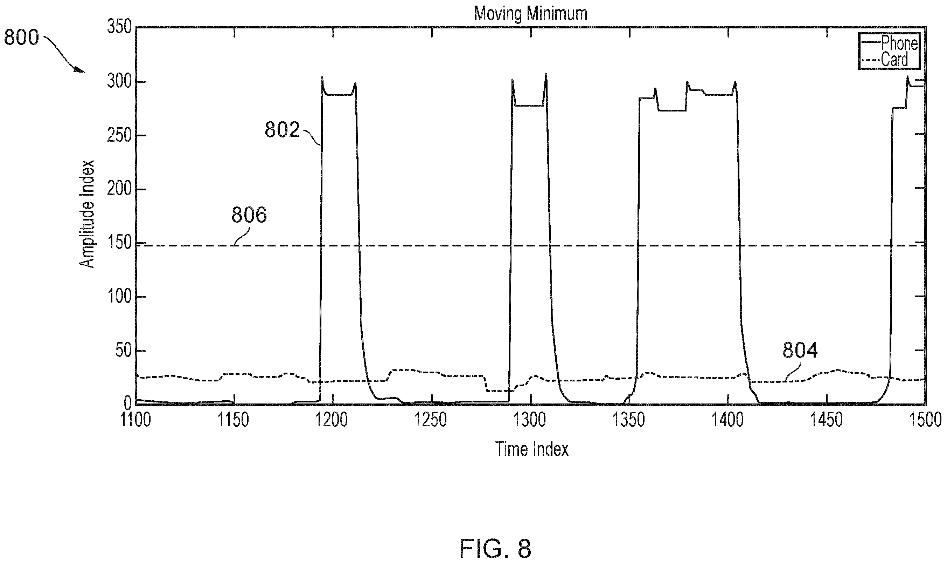

**Figs. 7 and 8** show a graph 700 displaying raw data of amplitude versus time, and a graph 800 displaying a moving minimum of amplitude versus time. In particular, example measurements of calculations for NFC signals sent by a phone (i.e., an active NFC device) and an NFC-A-type card (i.e. a passive NFC device) are shown. It can be seen that the back link response from a mobile phone has higher minimum value during the "low state" (i.e., the valley) of the subcarrier compared to that of a card. Therefore, by performing for example a sliding window minimum determination with a window length of k the responses can be evaluated based on the minimum during the "low state" of the back link communication. By doing so the processed response from mobile phones will have peaks and the processed response from cards will be quite flat. Therefore, the processed responses can be used to distinguish between mobile phones and cards.

For example, if the minimum values (i.e., the troughs) of the signal wave shown in Fig. 7 remain below a predefined threshold during a predefined time window, then it may be concluded that the signal is transmitted by a passive NFC device, e.g. a card. Otherwise, it may be concluded that the signal is transmitted by an active NFC device, e.g. a mobile phone. It is noted that the time window may cover the low state of the subcarrier, in order to facilitate an accurate distinction between a passive and active NFC device. Fig. 8 shows the predefined threshold 806, as well as graphs 802, 804 representing a moving minimum (i.e., the troughs) of the signal waves of a mobile phone and a card, respectively. In this way, a passive NFC device may easily be distinguished from an active NFC device. Alternatively, a passive NFC device may be distinguished from an active NFC device in the following way. If the difference between the maximum and minimum of the moving minimum is lower than a predefined threshold, then it may be concluded that the signal is transmitted by a passive NFC device. Otherwise, it may be concluded that the signal is transmitted by an active NFC device. This alternative implementation may result in a more accurate determination of the type of NFC device.

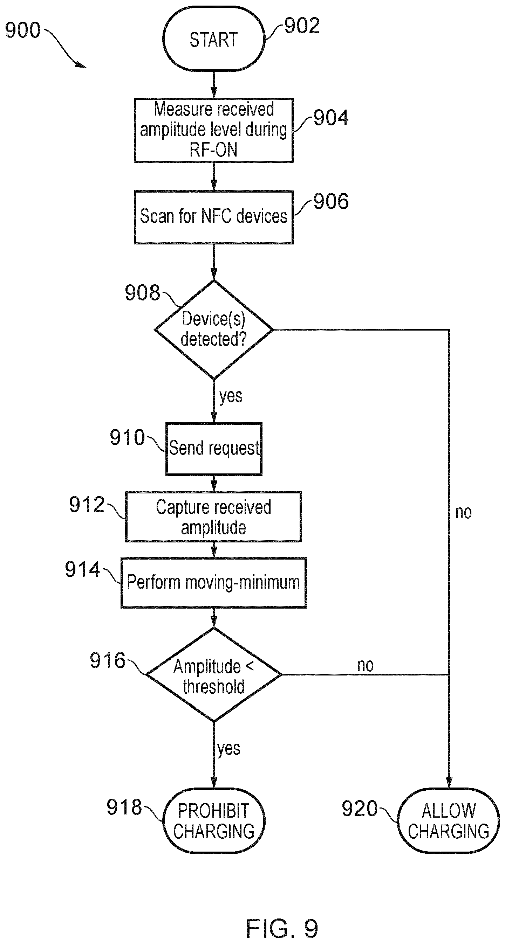

**Fig. 9** shows another illustrative embodiment of a method 900 of operating a wireless charging device. Fig. 9 shows another illustrative embodiment of a method 900 of operating a wireless charging device. In particular, a flowchart is shown which depicts an NFC polling loop that includes an NFC device distinction based on the characteristics of the back link modulation. First, an NFC scan 906 for the required NFC technologies is performed by the PCD. If no device is detected, the resulting outcome is "Allow Charging" 920 since there no device is placed on the charger. If a device is detected by the NFC scan 906, then a second request to the specific detected device is sent 910 by the PCD. The detected device will respond back to the second request after a specified time, and the NFC front-end device will capture the I-data and Q-data of the back link response and send them to the microcontroller for further processing. Then the peak amplitude ($A_p$) based on the received I-data and Q-data may be calculated as shown in equation 1 below.

$$A_p = \sqrt{I^2 + Q^2} \qquad \text{(Equation 1)}$$

The next step is to perform 914 a sliding window minimum with a window length of k of the calculated amplitude of the response. If the difference between the maximum and minimum of the moving minimum is lower than a predefined threshold, then the detected NFC device will be classified as a passive NFC device and the resulting outcome will be "Prohibit Charging" 918. Otherwise, the detected NFC device will be classified as a mobile phone and the resulting outcome will be "Allow Charging" 920.

It is noted that the embodiments above have been described with reference to different subject-matters. In particular, some embodiments may have been described with reference to method-type claims whereas other embodiments may have been described with reference to apparatus-type claims. However, a person skilled in the art will gather from the above that, unless otherwise indicated, in addition to any combination of features belonging to one type of subject-matter also any combination of features relating to different subject-matters, in particular a combination of features of the method-type claims and features of the apparatus-type claims, is considered to be disclosed with this document.

Furthermore, it is noted that the drawings are schematic. In different drawings, similar or identical elements are provided with the same reference signs. Furthermore, it is noted that in an effort to provide a concise description of the illustrative embodiments, implementation details which fall into the customary practice of the skilled person may not have been described. It should be appreciated that in the development of any such implementation, as in any engineering or design project, numerous implementation-specific decisions must be made in order to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill.

Finally, it is noted that the skilled person will be able to design many alternative embodiments without departing from the scope of the appended claims. In the claims, any reference sign placed between parentheses shall not be construed as limiting the claim. The word "comprise(s)" or "comprising" does not exclude the presence of elements or steps other than those listed in a claim. The word "a" or "an" preceding an element does not exclude the presence of a plurality of such elements. Measures recited in the claims may be implemented by means of hardware comprising several distinct elements and/or by means of a suitably programmed processor. In a device claim enumerating several means, several of these means may be embodied by one and the same item of hardware. The mere fact that certain measures are recited in mutually different dependent claims does not indicate that a combination of these measures cannot be used to advantage.

LIST OF REFERENCE SIGNS

| | |
|---|---|
| 100 | charging system |
| 102 | low frequency transmitter device |
| 104 | NFC passive device |
| 106 | limiter |
| 200 | wireless charging device |
| 202 | charging unit |
| 204 | detection unit |
| 206 | controller |
| 300 | method of operating a wireless charging device |
| 302 | detecting, by a detection unit included in a wireless charging device, whether an external device is a passive NFC device by analyzing a modulation characteristic of an NFC signal received by the external device |
| 304 | charging, by a charging unit included in the wireless charging device, the external device by wirelessly transferring power to said external device |
| 306 | controlling, by a controller included in the wireless charging device, the charging unit in dependence on an output of the detection unit, wherein said output indicates whether the external device is a passive NFC device |
| 400 | communication system |
| 402 | wireless charging device |
| 404 | NFC reader (PCD/poller) |
| 406 | LF Tx device |
| 408 | microcontroller |
| 410 | NFC end-point (PICC/listener) |
| 500 | NFC front-end |
| 502 | automatic RCV level control |
| 504 | mixers |
| 506 | baseband amplifiers |
| 508 | analog-to-digital converters |
| 600 | communication system |
| 602 | microcontroller |
| 604 | NFC front-end |
| 606 | PICC |
| 700 | amplitude versus time (raw data) |
| 702 | amplitude of a phone |
| 704 | amplitude of a card |
| 800 | amplitude versus time (moving minimum) |
| 802 | minimum amplitude of a phone |
| 804 | minimum amplitude of a card |
| 806 | threshold |
| 900 | method of operating a wireless charging device |
| 902 | start |
| 904 | measure received amplitude level during RF-ON |
| 906 | scan for NFC devices |
| 908 | device(s) detected? |
| 910 | send request |
| 912 | capture received amplitude |
| 914 | perform moving-minimum |
| 916 | amplitude < threshold |
| 918 | prohibit charging |
| 920 | allow charging |

**Claims**

1. A wireless charging device, comprising:

a charging unit configured to charge an external device by wirelessly transferring power to said external device;
a detection unit configured to detect whether the external device is a passive near field communication, NFC, device or an active NFC device by analyzing a modulation characteristic of an NFC signal received by the external device;
a controller configured to control the charging unit in dependence on an output of the detection unit, wherein said output indicates whether the external device is a passive NFC device or an active NFC device.

2. The wireless charging device of claim 1, wherein the controller is further configured to prevent the charging unit from charging the external device if the detection unit has detected that the external device is a passive NFC device, or to reduce the amount of power transferred by the charging unit if the detection unit has detected that the external device is a passive NFC device.

3. The wireless charging device of claim 1 or 2, wherein the controller is further configured to permit the charging unit to charge the external device if the detection unit has detected that the external device is an active NFC device.

4. The wireless charging device of any preceding claim, wherein the modulation characteristic is indicative of a type of modulation applied to the NFC signal, and wherein the type of modulation is passive load modulation or active load modulation.

5. The wireless charging device of any preceding claim, wherein the modulation characteristic is a minimum value of the NFC signal during a predefined time window.

6. The wireless charging device of claim 5, wherein the detection unit is configured to detect that the external device is a passive NFC device if said minimum value of the NFC signal remains below a predefined threshold during the entire time window.

7. The wireless charging device of any preceding claim, wherein the controller is further configured to keep the charging unit in a charging mode by default.

8. The wireless charging device of any preceding claim, wherein the charging unit comprises a low frequency, LF, transmitter configured to transfer power to the external device.

9. A method of operating a wireless charging device, comprising:

   detecting, by a detection unit included in the wireless charging device, whether an external device is a passive near field communication, NFC, device or an active NFC device by analyzing a modulation characteristic of an NFC signal received by the external device;
   charging, by a charging unit included in the wireless charging device, the external device by wirelessly transferring power to said external device;
   controlling, by a controller included in the wireless charging device, the charging unit in dependence on an output of the detection unit, wherein said output indicates whether the external device is a passive NFC device or an active NFC device.

10. The method of claim 9, wherein the controller prevents the charging unit from charging the external device if the detection unit has detected that the external device is a passive NFC device, or reduces the amount of power transferred by the charging unit if the detection unit has detected that the external device is a passive NFC device.

11. The method of claim 9 or 10, wherein the controller permits the charging unit to charge the external device if the detection unit has detected that the external device is an active NFC device.

12. The method of any one of claims 9 to 11, wherein the modulation characteristic is indicative of a type of modulation applied to the NFC signal, and wherein the type of modulation is passive load modulation or active load modulation.

13. The method of any one of claims 9 to 12, wherein the modulation characteristic is a minimum amplitude of the NFC signal during a predefined time window.

14. The method of claim 13, wherein the detection unit detects that the external device is a passive NFC device if said minimum amplitude of the NFC signal remains below a predefined threshold during the entire time window.

15. The method of any one of claims 9 to 14, wherein the controller keeps the charging unit in a charging mode by default.

**Amended claims in accordance with Rule 137(2) EPC.**

1. A wireless charging device (200), comprising:

   a charging unit (202) configured to charge an external device by wirelessly transferring power to said external device;
   a detection unit (204) configured to detect whether the external device is a passive near field communication, NFC, device or an active NFC device by analyzing a modulation characteristic of an NFC signal received by the external device;
   a controller (206) configured to control the charging unit (202) in dependence on an output of the detection unit (204), wherein said output indicates whether the external device is a passive NFC device or an active NFC device; **characterized in that** the modulation characteristic is a minimum amplitude of the NFC signal during a predefined time window, and wherein the detection unit (204) is configured to detect that the external device is a passive NFC device if said minimum amplitude of the NFC signal remains below a predefined threshold during the entire time window.

2. The wireless charging device (200) of claim 1, wherein the controller (206) is further configured to prevent the charging unit (202) from charging the external device if the detection unit (204) has detected that the external device is a passive NFC device, or to reduce the amount of power transferred by the charging unit (202) if the detection unit has detected that the external device is a passive NFC device.

3. The wireless charging device (200) of claim 1 or 2, wherein the controller (206) is further configured to permit the charging unit (202) to charge the external device if the detection unit (204) has detected that the external device is an active NFC device.

4. The wireless charging device (200) of any preceding claim, wherein the modulation characteristic is indicative of a type of modulation applied to the NFC signal, and wherein the type of modulation is passive load modulation or active load modulation.

5. The wireless charging device (200) of any preceding claim, wherein the controller (206) is further configured to keep the charging unit (202) in a charging mode by default.

6. The wireless charging device (200) of any preceding claim, wherein the charging unit (202) comprises a low frequency, LF, transmitter configured to transfer power to the external device.

7. A method (300) of operating a wireless charging device, comprising:

detecting (302), by a detection unit included in the wireless charging device, whether an external device is a passive near field communication, NFC, device or an active NFC device by analyzing a modulation characteristic of an NFC signal received by the external device; charging (304), by a charging unit included in the wireless charging device, the external device by wirelessly transferring power to said external device; controlling (306), by a controller included in the wireless charging device, the charging unit in dependence on an output of the detection unit, wherein said output indicates whether the external device is a passive NFC device or an active NFC device; **characterized in that** the modulation characteristic is a minimum amplitude of the NFC signal during a predefined time window, wherein the detection unit detects that the external device is a passive NFC device if said minimum amplitude of the NFC signal remains below a predefined threshold during the entire time window.

8. The method (300) of claim 7, wherein the controller prevents the charging unit from charging the external device if the detection unit has detected that the external device is a passive NFC device, or reduces the amount of power transferred by the charging unit if the detection unit has detected that the external device is a passive NFC device.

9. The method (300) of claim 7 or 8, wherein the controller permits the charging unit to charge the external device if the detection unit has detected that the external device is an active NFC device.

10. The method (300) of any one of claims 7 to 9, wherein the modulation characteristic is indicative of a type of modulation applied to the NFC signal, and wherein the type of modulation is passive load modulation or active load modulation.

11. The method (300) of any one of claims 7 to 10, wherein the controller keeps the charging unit in a charging mode by default.

FIG. 1

**200** Wireless charging device

**202**
Charging unit

**206**
Controller

**204**
Detection unit

FIG. 2

300 ⟍

**302**
Detecting, by a detection unit included in a wireless charging device, whether an external device is a passive NFC device by analyzing a modulation characteristic of an NFC signal received by the external device

**304**
Charging, by a charging unit included in the wireless charging device, the external device by wirelessly transferring power to said external device

**306**
Controlling, by a controller included in the wireless charging device, the charging unit in dependence on an output of the detection unit, wherein said output indicates whether the external device is a passive NFC device

FIG. 3

FIG. 4

FIG. 5

FIG. 6

Raw Data

FIG. 7

Moving Minimum

Phone
Card

350
300
250
200
150
100
50
0

Amplitude Index

1100  1150  1200  1250  1300  1350  1400  1450  1500

Time Index

800
802
806
804

FIG. 8

900

START — 902

Measure received
amplitude level during
RF-ON — 904

Scan for NFC devices — 906

908 — Device(s)
detected? — no

yes

910 — Send request

912 — Capture received
amplitude

914 — Perform moving-minimum

916 — Amplitude <
threshold — no

yes

918 — PROHIBIT
CHARGING

920 — ALLOW
CHARGING

FIG. 9

| Europäisches Patentamt European Patent Office Office européen des brevets | **EUROPEAN SEARCH REPORT** | Application Number EP 23 18 4487 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/374365 A1 (PATRICIO GUSTAVO JOSE HENRIQUES [AT] ET AL) 2 December 2021 (2021-12-02) * paragraphs [0030], [0102], [0131], [0132], [0171]; figures 1, 14 * | 1-15 | INV. H02J50/80 H02J50/10 H02J50/90 H02J7/00 H02J7/34 |
| X | WO 2022/133717 A1 (STMICROELECTRONICS CHINA INVEST CO LTD [CN]) 30 June 2022 (2022-06-30) * abstract; figures 1,3c * * page 13, lines 6-10 * * page 19, lines 27-29 * * page 8, lines 23-28; claim 16 * | 1-15 | |
| X | EP 4 207 614 A1 (NXP BV [NL]) 5 July 2023 (2023-07-05) * abstract; claims 1,4 * | 1-15 | |
| X | US 10 892 647 B2 (WITS CO LTD [KR]) 12 January 2021 (2021-01-12) * column 3, line 55 – column 4, line 4 * | 1-4, 7-12,15 | |
| X | US 2023/098471 A1 (CRACIUN SERBAN [RO]) 30 March 2023 (2023-03-30) * paragraphs [0018], [0027] * | 1-4,8-12 | TECHNICAL FIELDS SEARCHED (IPC) H02J H04B G06K |

The present search report has been drawn up for all claims

| Place of search | Date of completion of the search | Examiner |
|---|---|---|
| Munich | 17 January 2024 | Ríos Báez, Abel |

EPO FORM 1503 03.82 (P04C01)

## ANNEX TO THE EUROPEAN SEARCH REPORT
## ON EUROPEAN PATENT APPLICATION NO.

**EP 23 18 4487**

This annex lists the patent family members relating to the patent documents cited in the above-mentioned European search report.
The members are as contained in the European Patent Office EDP file on
The European Patent Office is in no way liable for these particulars which are merely given for the purpose of information.

**17-01-2024**

| Patent document cited in search report | | | Publication date | Patent family member(s) | | | Publication date |
|---|---|---|---|---|---|---|---|
| US 2021374365 | A1 | | 02-12-2021 | CN | 113743138 | A | 03-12-2021 |
| | | | | EP | 3917023 | A1 | 01-12-2021 |
| | | | | EP | 4277143 | A2 | 15-11-2023 |
| | | | | US | 2021374365 | A1 | 02-12-2021 |
| WO 2022133717 | A1 | | 30-06-2022 | CN | 116671027 | A | 29-08-2023 |
| | | | | EP | 4268377 | A1 | 01-11-2023 |
| | | | | WO | 2022133717 | A1 | 30-06-2022 |
| EP 4207614 | A1 | | 05-07-2023 | CN | 116436495 | A | 14-07-2023 |
| | | | | EP | 4207614 | A1 | 05-07-2023 |
| | | | | US | 2023216543 | A1 | 06-07-2023 |
| US 10892647 | B2 | | 12-01-2021 | CN | 109802471 | A | 24-05-2019 |
| | | | | US | 2019148980 | A1 | 16-05-2019 |
| US 2023098471 | A1 | | 30-03-2023 | CN | 115280320 | A | 01-11-2022 |
| | | | | EP | 3869383 | A1 | 25-08-2021 |
| | | | | KR | 20220114079 | A | 17-08-2022 |
| | | | | US | 2023098471 | A1 | 30-03-2023 |
| | | | | WO | 2021164960 | A1 | 26-08-2021 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **MICHAEL GEBHART et al.** Active Load Modulation for Contactless Near-Field Communication. *IEEE International Conference on RFID-Technologies and Applications (RFID-TA)*, 2012